# EUROPEAN PATENT SPECIFICATION

(11) **EP 4 336 873 B1**
(45) Date of publication and mention of the grant of the patent: **12.02.2025**
(21) Application number: 21949590.0
(22) Date of filing: 12.07.2021
(51) Int. Cl.: H04W 4/80, H04W 76/14, H04W 48/14, H04W 84/18

(54) **BLUETOOTH CONNECTION METHOD AND APPARATUS**
BLUETOOTH-VERBINDUNGSVERFAHREN UND -VORRICHTUNG
PROCÉDÉ ET APPAREIL DE CONNEXION BLUETOOTH

(43) Date of publication of application: 13.03.2024
(73) Proprietor: Huawei Technologies Co., Ltd., Shenzhen, Guangdong 518129 (CN)
(72) Inventor: ZHANG, Zehong, Shenzhen, Guangdong 518129 (CN); CAO, Cong, Shenzhen, Guangdong 518129 (CN); CHEN, Tong, Shenzhen, Guangdong 518129 (CN); LU, Han, Shenzhen, Guangdong 518129 (CN); YANG, Yufei, Shenzhen, Guangdong 518129 (CN); JING, Dishan, Shenzhen, Guangdong 518129 (CN); XUE, Kai, Shenzhen, Guangdong 518129 (CN)
(74) Representative: Körber, Martin Hans
(86) International application number: PCT/CN2021/105860
(87) International publication number: WO 2023/283794

(56) References cited:
- CN-A- 105 898 682
- CN-A- 105 898 682
- CN-A- 108 551 670
- CN-A- 111 436 038
- US-A1- 2014 188 348
- US-A1- 2017 223 615
- US-A1- 2019 150 215

## Description

This application relates to the field of Bluetooth technologies, and in particular, to a Bluetooth connection method and apparatuses.

### BACKGROUND

As a wireless transmission technology, Bluetooth is widely used in smart devices such as mobile phones, headsets, and wearable devices. After the Bluetooth special interest group (Bluetooth SIG) released a Bluetooth low energy (BLEILE) connection mode in 2011, two connection modes: low energy Bluetooth and classic Bluetooth (BT) greatly expand Bluetooth application scenarios, so that the Bluetooth technology is applied to more devices.

When Bluetooth devices communicate with each other by using the Bluetooth, Bluetooth connection speed directly affects user experience. Currently, establishing a BLE connection needs to meet that a data packet for establishing the BLE connection is received by a BLE scan window, and establishing a BT connection needs to meet that a data packet for establishing the BT connection is received by a BT scan window. To increase connection speed of the two connection modes, enabling duration of the BLE scan window and the BT scan window is usually increased to increase a probability that the two scan windows receive corresponding data packets. This method greatly increases power consumption of the devices. Therefore, the Bluetooth devices need to increase the Bluetooth connection speed in another manner.

CN 105 898 682 A discloses a Bluetooth communication method that is applied to the process of establishing Bluetooth communication between an electronic device based on a Linux system and a standard Bluetooth device and a low-power Bluetooth device.

US 2019/0150215 Al discloses a method for establishing a classic Bluetooth connection between dual-mode Bluetooth devices, and a dual-mode Bluetooth device.

### SUMMARY

Embodiments of this application provide a Bluetooth connection method and an apparatus, to increase Bluetooth connection speed. The invention is defined in the independent claims. Additional features of the invention are provided in the dependent claims. In the following, parts of the description and drawings referring to embodiments which are not covered by the claims are not presented as embodiments of the invention, but are examples useful for understanding the invention.

To achieve the foregoing objective, embodiments of this application provide the following technical solutions.

Claim 1: Method related to Bluetooth connection establishment.

Claim 9: Method related to Bluetooth connection establishment.

Claim 10: Apparatus corresponding to claim 1.

Claim 11: Apparatus corresponding to claim 9.

Claim 12: Computer-readable storage medium, corresponding to claims 1-9.

In the foregoing aspects, for beneficial effects of an apparatus corresponding to a method, refer to beneficial effects of the corresponding method. Details are not described again.

### BRIEF DESCRIPTION OF DRAWINGS

FIG. 1 is an exchange flowchart of establishing a classic Bluetooth connection;
FIG. 2 is a schematic diagram of a scan window of establishing a classic Bluetooth connection;
FIG. 3 is an exchange flowchart of establishing a Bluetooth low energy connection;
FIG. 4 is a schematic diagram of a scan window of establishing a Bluetooth low energy connection;
FIG. 5 is an exchange flowchart of a Bluetooth connection method according to an embodiment of this application;
FIG. 6 is a schematic diagram of a scan window of a Bluetooth connection method according to an embodiment of this application;
FIG. 7 is a schematic diagram of a scan window of a Bluetooth connection method according to an embodiment of this application;
FIG. 8 is an exchange flowchart of a Bluetooth connection method according to an embodiment of this application;
FIG. 9 is an exchange flowchart of a Bluetooth connection method according to an embodiment of this application;
FIG. 10 is an exchange flowchart of a Bluetooth connection method according to an embodiment of this application;
FIG. 11 is a schematic diagram of a scan window of a Bluetooth connection method according to an embodiment of this application;
FIG. 12 is an exchange flowchart of a Bluetooth connection method according to an embodiment of this application;
FIG. 13 is a schematic diagram of composition of a Bluetooth communication apparatus according to an embodiment of this application; and
FIG. 14 is a schematic diagram of a hardware structure of a Bluetooth communication apparatus according to an embodiment of this application.

### DESCRIPTION OF EMBODIMENTS

In the descriptions of this application, unless otherwise specified, "/" means "or", for example, A/B may represent A or B. A term "and/or" in this specification describes only an association relationship between associated objects and indicates that there may be three relationships. For example, A and/or B may indicate the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that, in this application, terms such as "example" or "for example" are used to indicate an example, an instance, or an illustration. Any embodiment or design scheme described as "example" or "for example" in this application should not be explained as being more preferred or having more advantages than another embodiment or design scheme. Exactly, use of the word "example", "for example", or the like is intended to present a related concept in a specific manner.

Currently, when two Bluetooth devices establish a classic Bluetooth (BT) connection or a Bluetooth low energy (BLE) connection, in a process of establishing the Bluetooth connection, a device that performs fixed-periodicity scanning is referred to as a scanning party, and a device that initiates a connection request is referred to as a connecting party. The scanning party and the connecting party need to implement the Bluetooth connection through four processes: device discovery, parameter exchange, connection confirmation, and information exchange.

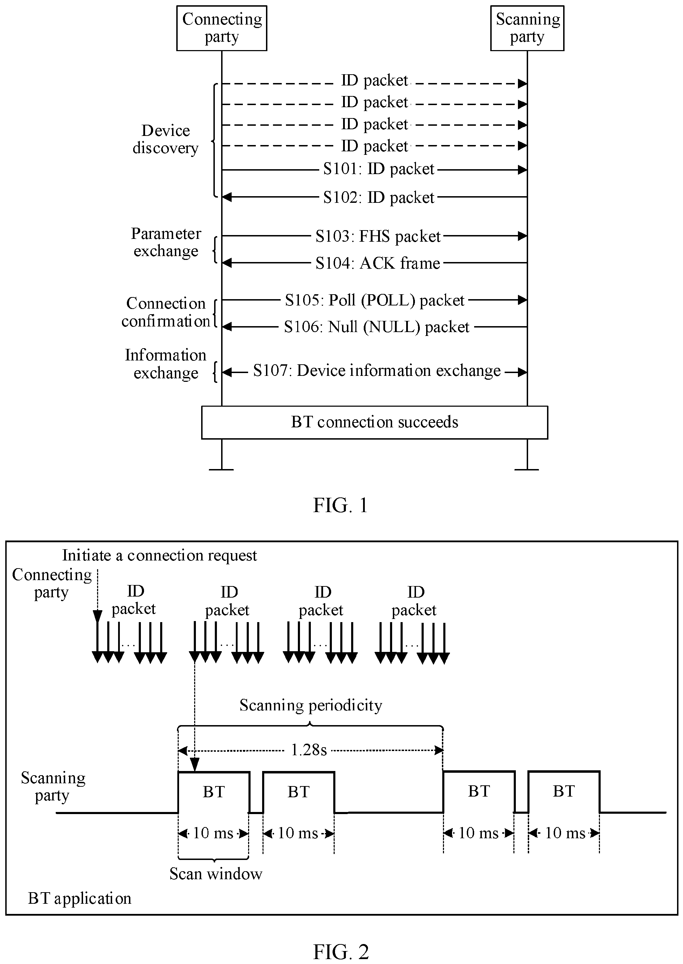

With reference to FIG. 1, the following describes an example of a process of establishing a BT connection between a scanning party and a connecting party.

As shown in FIG. 1, the process of establishing the BT connection includes the following steps.

S101: The connecting party sends a paging packet (an ID packet), and correspondingly, the scanning party receives the paging packet.

The ID packet sent by the connecting party is used by the scanning party to discover the connecting party. The ID packet is used by the connecting party to establish a connection to the scanning party, and the ID packet carries device synchronization code that is used by the connecting party to identify a determined scanning party.

In Bluetooth communication, the connecting party may send the ID packet in a frequency hopping manner. Frequency hopping means dividing a frequency band into several channels and "hopping" from one channel to another channel for data transmission.

In specific implementation of S101, the scanning party enables a page scan window (page scan) to perform fixed-periodicity scanning, where the page scan is used to receive the ID packet.

As shown in FIG. 2, for example, the scanning party performs BT scanning by using a BT scanning periodicity of 1.28s, and two BT scan windows may be enabled in each scanning periodicity. When the ID packet sent by the connecting party "collides" with the BT scan window enabled by the scanning party, the scanning party successfully receives the ID packet, and the scanning party and the connecting party successfully exchange. Therefore, an ID packet sent by the connecting party through frequency hopping before S101 is an ID packet that is not successfully received by the scanning party.

It should be noted that duration of the BT scanning periodicity of the scanning party and duration and a quantity of the BT scan windows enabled in each BT scanning periodicity may be determined based on a power consumption requirement of the device. Longer total duration of the BT scan window indicates higher power consumption. This is not limited in this application.

S102: The scanning party replies to the connecting party with the ID packet, and correspondingly, the connecting party receives the ID packet replied with by the scanning party.

The scanning party parses the ID packet sent by the connecting party and replies with the ID packet. The ID packet replied with by the scanning party is used to confirm that the connection is supported. The ID packet replied with by the scanning party carries the device synchronization code. The ID packet replied with by the scanning party may also be referred to as feedback of the ID packet sent by the connecting party. Correspondingly, the connecting party receives the feedback.

S103: The connecting party sends a frequency hopping synchronization (frequency hopping synchronization, FHS) packet, and correspondingly, the scanning party receives the FHS packet.

After receiving the ID packet, the connecting party parses the ID packet, and determines that the scanning party supports the connection. In this case, the connecting party sends the FHS packet to the scanning party, where the FHS packet includes frequency, slot, and address information of a signal sent by the connecting party through frequency hopping, that is, a specific communication resource for establishing the BT connection. The frequency and the slot are used to implement time and frequency synchronization between the scanning party and the connecting party in the process of establishing the connection. The specific communication resource for establishing the BT connection may also be referred to as connection information for establishing the BT connection.

S104: The scanning party replies with an acknowledgment ACK (acknowledge) frame to the connecting party, and correspondingly, the connecting party receives the ACK frame.

The ACK frame is used to confirm that the scanning party successfully receives the FHS packet and parses the slot and address information carried in the FHS packet.

It should be noted that, after step S101 to step S104 are completed, a communication link of the BT connection is established between the connecting party and the scanning party.

S105: The connecting party sends a poll (POLL) packet to the scanning party, and correspondingly, the scanning party receives and parses the poll packet.

The poll packet is sent to the scanning party on the communication link through the specific communication resource, to confirm whether the scanning party can successfully receive the poll packet. The poll packet may include data information, or may not include the data information.

S106: The scanning party replies with a null (NULL) packet to the connecting party, and correspondingly, the connecting party receives and parses the null packet.

The null packet is also sent to the connecting party on the communication link based on the specific communication resource, indicating that the scanning party successfully receives the poll packet, and a process of determining that the connecting party and the scanning party can successfully transmit a signal on the specific communication resource is completed.

S107: The connecting party performs device information exchange with the scanning party.

In S107, the connecting party and the scanning party send device information such as a data packet type that is supported by either the connecting party or the scanning party and used for subsequent transmission of data information, confirm a bearing manner of exchanging data information between the two parties that establish the BT connection, to complete the BT connection.

In FIG. 1, a device discovery process is completed through steps S101 and S102, a parameter exchange process is completed through steps S103 and S104, a connection confirmation process is completed through steps S105 and S106, and an information exchange process is completed through step S107, to complete a complete BT connection process.

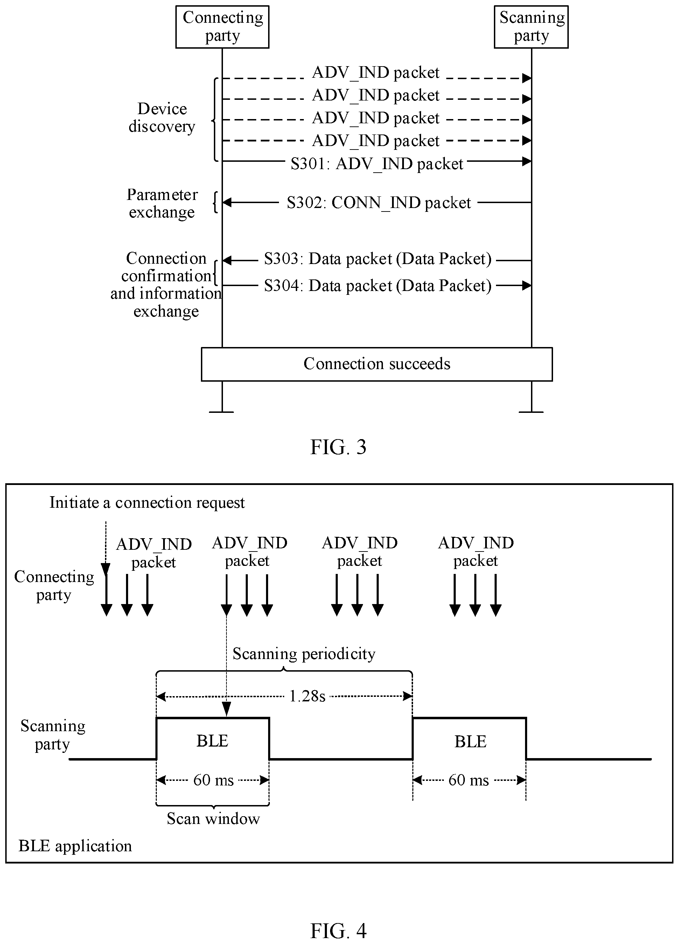

With reference to FIG. 3, the following describes an example of a process of establishing a BLE connection between a scanning party and a connecting party.

As shown in FIG. 3, the process of establishing the BLE connection includes the following steps.

S301: The connecting party sends an advertising packet, and correspondingly, the scanning party receives the advertising packet.

The advertising packet sent by the connecting party through frequency hopping is used by the scanning party to discover a device of the connecting party. Advertising is classified into legacy advertising (legacy advertising) and extended advertising (extended advertising). An advertising packet for establishing a connection in the legacy advertising includes a connectable undirected advertising (ADV_IND) packet, a connectable directed advertising (ADV _DIRECT_IND) packet, and a scannable undirected advertising (ADV_SCAN_IND) packet. The ADV_IND packet indicates that a current device can accept a connection from any device, and includes address information of the connecting party. The ADV_DIRECT_IND packet includes a device address of the determined scanning party, and the determined scanning party scans and receives the ADV_DIRECT_IND packet and establishes the connection. The ADV_SCAN_IND packet may send advertising data and be scanned by the scanning party, but the connection cannot be established.

During specific implementation of S301, the scanning party enables an advertising scan window (BLE SCAN) or a connection scan window (INIT) to perform fixed-periodicity scanning, where the BLE SCAN is used to receive the ADV_IND packet sent by the connecting party, and the INIT is used to receive the ADV_SCAN_IND packet sent by the connecting party. In this application, the ADV_IND packet and a corresponding advertising scan window (BLE scan window for short) are used as an example for description. For another type of advertising packet and a corresponding scan window, refer to this packet for understanding. Details are not described again.

As shown in FIG. 4, for example, the scanning party performs BLE scanning in a manner of enabling a scan window by using a scanning periodicity of 1.28s. When the ADV_IND packet sent by the connecting party "collides" with the BLE scan window enabled by the scanning party, the scanning party successfully receives the ADV_IND packet, and the scanning party and the connecting party successfully exchange. Therefore, an ADV_IND packet sent by the connecting party through frequency hopping before S301 is an ADV_IND packet that is not successfully received by the scanning party.

It should be noted that a BLE scanning periodicity of the scanning party and duration of enabling the BLE scan window in each BLE scanning periodicity also depend on a power consumption requirement of the device. Longer total duration of enabling the BLE scan window indicates higher power consumption. This is not limited in this application.

S302: The scanning party replies with a connection information (CONN_IND) packet to the connecting party, and correspondingly, the connecting party receives the CONN_IND packet.

The scanning party parses the ADV_IND packet sent by the connecting party and replies with the CONN_IND packet. The scanning party replies with the CONN_IND packet to confirm that the connection is supported, where the CONN_IND packet carries information such as access code, a frequency, a slot, an address, and the like. The access code is used to confirm the scanning party and the connecting party that establish the connection. The frequency, slot, and address information indicate frequency, slot, and address information that are used when the scanning party sends a signal to the connecting party, that is, a specific communication resource for establishing the BLE connection between the scanning party and the connecting party. This is used to implement a synchronous connection between the scanning party and the connecting party in time and frequency. The specific communication resource for establishing the BLE connection may also be referred to as connection information for establishing the BLE connection.

It should be noted that, after step S301 and step S302 are completed, a communication link of the BLE connection is established between the connecting party and the scanning party.

S303: The scanning party sends a data packet (Data Packet) to the connecting party.

The data packet is sent by the scanning party to the connecting party on the communication link based on the foregoing specific communication resource, and is referred to as an acknowledgment data packet in this application. The data packet is used to confirm whether the connecting party receives the CONN_IND packet and successfully obtains the specific communication resource in the CONN_IND packet. The data packet may further include device capability information such as a data packet type that is supported by the scanning party and used for data information transmission, for reference and selection by the connecting party that receives the data packet.

S304: The connecting party receives the data packet and replies with the data packet, and correspondingly, the scanning party receives the data packet.

When the connecting party successfully receives the data packet sent by the scanning party, this indicates that the connecting party successfully receives the CONN_IND packet and obtains the specific communication resource in the CONN_IND packet. The connecting party replies with the data packet on the communication link, and completes a process of determining whether the connecting party and the scanning party can successfully transmit the signal on the specific communication resource.

The data packet replied with by the connecting party may also include the device capability information such as a data packet type that is supported by the connecting party and used for data information transmission, so that the scanning party that receives the data packet determines a bearing manner of exchanging data information between the two parties that establish the BLE connection, and the process of establishing the BLE connection between the connecting party and the scanning party is completed.

In FIG. 3, a device discovery process is implemented through step S301, a parameter exchange process is implemented through step S302, and a connection confirmation process and an information exchange process are completed through steps S303 and S304, to establish a complete BLE connection.

In the foregoing two types of Bluetooth connections, both the scanning party device and the connecting party device are Bluetooth devices. The Bluetooth device is a device that supports the Bluetooth connection. Currently, Bluetooth devices are classified into three types based on the BLE connection and the BT connection: single-mode Bluetooth, dual-mode Bluetooth, and classic Bluetooth. The dual-mode Bluetooth supports the BLE connection and the BT connection, the single-mode Bluetooth supports only the BLE connection, and the classic Bluetooth supports only the BT connection.

The Bluetooth device may be a terminal, and the terminal is configured to provide one or more of a voice service and a data connectivity service for a user. The terminal may also be referred to as user equipment (user equipment, UE), a terminal device, an access terminal, a subscriber unit, a subscriber station, a mobile station, a remote station, a remote terminal, a mobile device, a user terminal, a wireless communication device, a user agent, or a user apparatus. There are various types of Bluetooth devices in the market, and the Bluetooth devices are mainly classified into two types. One is low-energy terminal devices with simple functions, such as a band, a mouse, and a headset. Some of these devices are the single-mode Bluetooth or the classic Bluetooth, that is, support one connection mode, the BT connection or the BLE connection, and some are the dual-mode Bluetooth, that is, support both connection modes. The other type is intelligent control center terminal devices, which generally have complex functions and need to be compatible with various low-energy nodes, such as a mobile phone, a smart TV, an augmented reality (augmented reality, AR) device, a virtual reality (virtual reality, VR) device, a tablet computer, a notebook computer, an ultra-mobile personal computer (ultra-mobile personal computer, UMPC), a netbook, a personal digital assistant (personal digital assistant, PDA). These devices usually need to support two connection modes including the BT and the BLE. An organic combination of these two types of devices builds a variety of application scenarios, and greatly facilitates communication and life of people.

For the intelligent control center terminal device, to be compatible with various types of external devices that support only the BT connection or the BLE connection, a BT scan window and a BLE scan window need to be normally enabled. Once an ID packet sent by the external device is received by the BT scan window, or an ADV_IND packet sent by the external device is received by the BLE scan window, a corresponding BT connection or BLE connection may be established. Specifically, the intelligent control center terminal device (for example, a mobile phone) may determine, based on an application, a type of the Bluetooth connection to be established. It is assumed that the application chooses to establish the BT connection (where in this case, the application may be referred to as a BT application). If a BLE scan window of the mobile phone first receives an ADV_IND packet for establishing the BLE connection, the mobile phone chooses to discard the ADV_IND packet until an ID packet is received in a BT scan window, and the foregoing steps S102 to S107 are then performed. Similarly, when the application chooses to establish the BLE connection (where in this case, the application may be referred to as a BLE application), if the BT scan window of the mobile phone first receives the ID packet for establishing the BT connection, the mobile phone chooses to discard the ID packet until the ADV_IND packet is received in the BLE scan window, and the foregoing steps S302 to S304 are then performed. Therefore, information cannot be shared in a process of establishing the BT connection or the BLE connection. In other words, when the BT connection is established, information of the ADV_IND packet that is used for device discovery of the BLE connection cannot be shared, and when the BLE connection is established, information of the ID packet that is used for device discovery of the BT connection cannot be shared.

It may be understood that connection speed of the BT connection and connection speed of the BLE connection depend to a large extent on a scanning duty cycle corresponding to either the BT connection or the BLE connection. The scanning duty cycle is proportion of duration of a scan window to a scanning periodicity. A larger duty cycle indicates higher connection speed and higher power consumption. Most devices require a difficult trade-off between the power consumption and the connection speed.

For the foregoing processes of the two types of Bluetooth connection, to increase Bluetooth connection speed, this application provides a Bluetooth connection method used between Bluetooth devices. In this method, a scanning party receives an ID packet or an ADV_IND packet from a connecting party. For a BT application, if the ADV_IND packet is first received, a BT connection may be established to the connecting party based on the ADV_IND packet (where the process is referred to as BT Over BLE for short below). For a BLE application, if the ID packet is first received, a BLE connection may be established to the connecting party based on the ID packet (where the process is referred to as BLE Over BT below). Therefore, Bluetooth connection speed is increased.

The method provided in this application is applicable to a Bluetooth technology, and may also be applicable to another related connection technology, for example, a Greentooth technology in SparkLink.

To increase the Bluetooth connection speed, this application provides the following methods shown in a solution 1 to a solution 5. The solution 1 to the solution 3 are specific implementations of the BT Over BLE, and the solution 4 and the solution 5 are specific implementations of the BLE Over BT. The following describes an example of technical solutions of this application with reference to accompanying drawings.

### Solution 1

In the solution 1, an ADV_IND packet triggers to enable a BT scan window to receive an ID packet, to increase BT connection speed.

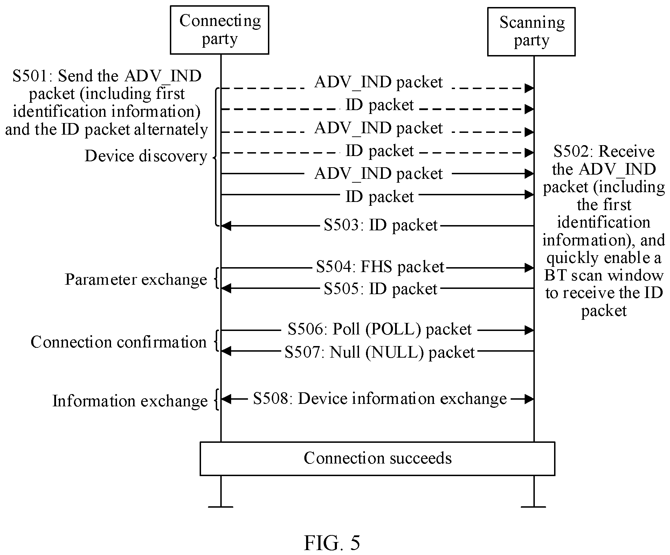

As shown in FIG. 5, during implementation, the solution 1 may include S501 to S508.

S501: A connecting party sends the ADV_IND packet and the ID packet alternately, and a scanning party enables the BT scan window and a BLE scan window to perform scanning.

A current connecting party sends the ID packet according to the foregoing S101 in a BT connection establishment mode, and sends the ADV_IND packet according to the foregoing S301 in a BLE connection establishment mode. The connecting party switches between the BT connection establishment mode and the BLE connection establishment mode, to send the ADV_IND packet and the ID packet alternately.

For example, the two modes may be switched by setting enabling duration of each mode. For example, when the BT connection mode is enabled, after the ID packet is sent for duration A based on the foregoing S101, the BT connection mode is switched to the BLE connection mode to send the ADV_IND packet for duration B based on the foregoing S301. Alternatively, the two modes may be switched by setting a quantity of packets sent in each mode. For example, when the BT connection mode is enabled, after M ID packets are sent based on the foregoing S101, the BT connection mode is switched to the BLE connection mode to send N ADV_IND packets based on the foregoing S301. A and B are real numbers greater than or equal to zero, and M and N are integers greater than or equal to zero.

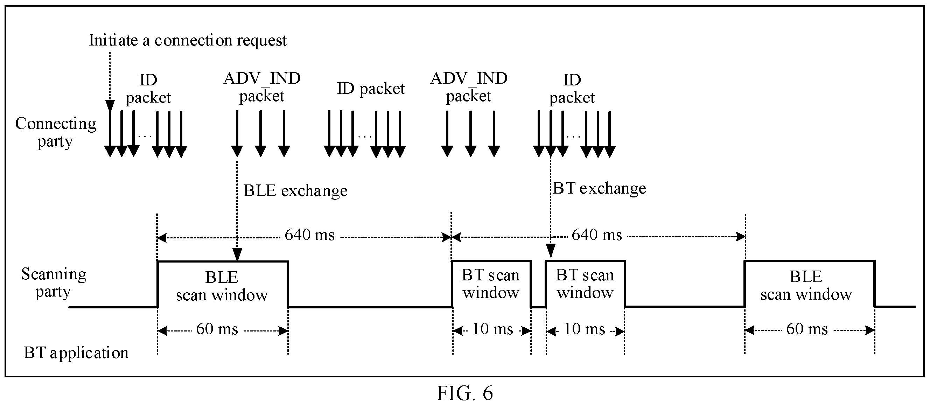

As shown in FIG. 6, the connecting party sends the ADV_IND packet and the ID packet alternately, where the ADV_IND packet and the ID packet may be alternately sent based on a specific quantity, or may be sent at intervals based on specific duration. The scanning party enables the BLE scan window and the BT scan window to perform scanning based on a scanning periodicity of either the BLE scan window or the BT scan window. When the BLE scan window scans the ADV_IND packet, BLE exchange is performed. When the BT scan window scans the ID packet, BT exchange is performed.

Optionally, the connecting party may send the ADV_IND packet and the ID packet alternately under an indication of an application layer. The connecting party supports two types of Bluetooth connection. When the application layer of the connecting party indicates to establish a BT connection or a BLE connection, the connecting party may send the ADV_IND packet and the ID packet alternately, to accelerate establishment of the BT connection or the BLE connection. When the connecting party determines to establish the BT connection, the connecting party generates identification information (which may be referred to as first identification information) corresponding to the BT connection, where the first identification information indicates the scanning party to enable the BT scan window. In a subsequent process, the scanning party may receive the ID packet in the enabled BT scan window and establish the BT connection. The first identification information may be included in the ADV_IND packet for sending.

S502: The scanning party receives the ADV_IND packet, and quickly enables the BT scan window to receive the ID packet.

The BLE scan window of the scanning party first receives the ADV_IND packet, and the scanning party parses the ADV_IND packet to obtain the first identification information, and enables the BT scan window based on the first identification information, to determine to establish the BT connection. In other words, the BLE exchange succeeds first, and the BT scan window is triggered to be enabled.

The quick enabling of the BT scan window means to enable the BT scan window in a preset time period, where the preset time period is in a scanning periodicity in which the BLE scan window is located, and the preset time period may be preset.

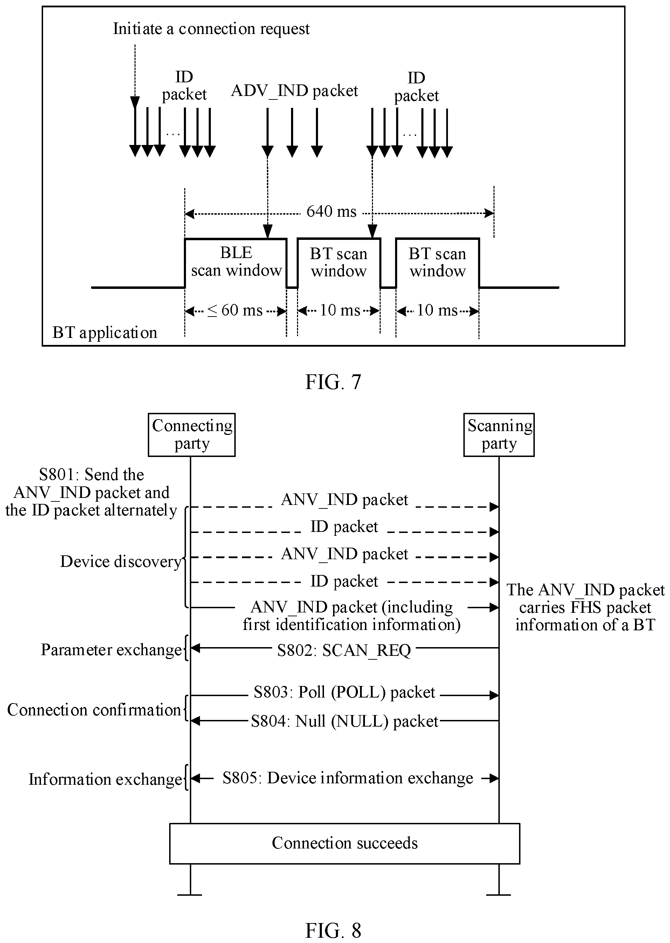

As shown in FIG. 7, the BT scan window is quickly enabled based on the ADV_IND packet. For example, the BT scan window may be enabled at an interval of two slots (slots) in the preset time period after the BLE scan window. This is not limited in this application.

It should be noted that, in the method shown in FIG. 7, after receiving the ADV_IND packet, based on an indication of the first identification information, the BLE scan window no longer performs BLE scanning, that is, the BLE scan window is closed after receiving the ADV_IND packet. Therefore, enabling duration of the BLE scan window is less than or equal to 60 ms, and enabling duration of the BT scan window may be adjusted based on closing of the BLE scan window.

It should be noted that, after receiving the ADV_IND packet, the scanning party does not need to reply with the packet, and the connecting party keeps sending the ADV_IND packet and the ID packet alternately. The scanning party enables the BT scan window to receive the ID packet to establish the BT connection. For example, a quantity and a size of the enabled BT scan windows may be adjusted based on power consumption performance of a device. As shown in the figure, two BT scan windows are enabled, or a plurality of BT scan windows may be enabled, or the BT scan window is continuously enabled to receive the ID packet.

S503 to S508 are respectively the same as S102 to S107.

According to the method provided in the solution 1, when the BLE scan window of the scanning party first receives the ADV_IND packet, the BT scan window is enabled based on the first identification information included in the ADV_IND packet, so that the ID packet can be received in the BT scan window as soon as possible instead of being received in an originally later BT scan window, and Bluetooth connection speed is increased.

According to the foregoing solution 1, the BT connection is established on a basis that the connecting party and the scanning party successfully exchange first based on the ADV_IND packet of the BLE. When a scanning periodicity of each type of Bluetooth is not shortened, or in other words, the scanning party keeps a current periodicity and enabling duration of the BT scan window and the BLE scan window, power consumption of the scanning party is not increased, a BLE device discovery process is accelerated, and Bluetooth response time is optimized by about 50%.

In the solution 1, the BLE scan window may be referred to as a first scan window, and the BT scan window may be referred to as a second scan window. A scanning periodicity in which the first scan window is located may be referred to as a first scanning periodicity, and a scanning periodicity in which the second scan window is located may be referred to as a second scanning periodicity. The ADV_IND packet may be referred to as a first-type data packet, and the ID packet may be referred to as a second-type data packet. The BLE connection may be referred to as a first-type Bluetooth connection, and the BT connection may be referred to as a second-type Bluetooth connection.

### Solution 2

In the solution 2, an ADV_IND packet carries information for establishing a BT connection, to increase BT connection speed.

As shown in FIG. 8, during implementation, the solution 2 may include S801 to S805.

S801: A connecting party sends the ADV_IND packet and an ID packet alternately, and a scanning party enables a BT scan window and a BLE scan window to perform scanning.

For descriptions of sending the ADV_IND packet and the ID packet alternately by the connecting party and enabling the BT scan window and the BLE scan window by the scanning party to perform scanning, refer to S501. The ADV_IND packet carries identification information (which may be referred to as first identification information) and an FHS packet corresponding to the first identification information.

It should be noted that, because the FHS packet includes connection information for establishing the BT connection between the scanning party and the connecting party, the FHS packet corresponding to the first identification information may also be understood as the connection information that is for establishing the BT connection between the scanning party and the connecting party and that corresponds to the first identification information.

S802: The scanning party receives the ADV_IND packet, and replies with an active scanning request SCAN_REQ.

The scanning party receives the ADV_IND packet, that is, BLE exchange succeeds first. The scanning party parses the ADV_IND packet to obtain the first identification information, determines, based on the first identification information, to establish the BT connection, and obtains connection information in the FHS packet corresponding to the first identification information, to establish the BT connection.

The scanning party replies with the SCAN_REQ based on the included connection information in the FHS packet corresponding to the first identification information, where a function of the SCAN_REQ is the same as that of an ACK frame, and is used to confirm that the scanning party receives the ANV_IND packet that carries the FHS packet. It should be noted that, the scanning party replies with the SCAN_REQ only when determining that the first identification information in the ADV_IND packet and the connection information in the FHS packet corresponding to the first identification information are received.

It should be noted that a slot carried in the ANV_IND packet needs to be dynamically updated based on a local clock, and the slot is the same as the slot carried in the FHS packet in S103, to ensure accuracy of synchronization between the connecting party and the scanning party in time and frequency.

S803 to S805 are respectively the same as S105 to S107. In other words, in S803 to S805, connection confirmation and information exchange in the BT connection are completed, to implement the BT connection.

According to the method provided in the solution 2, when the ADV_IND packet sent by the connecting party carries the connection information in the FHS packet, and the BLE scan window of the scanning party first receives the ADV_IND packet, the BT connection is directly established through parsing the first identification information carried in the ADV_IND packet and the connection information in the FHS packet corresponding to the first identification information, so that the BT connection is established by using information exchanged through the BLE instead of receiving the ID packet in the BT scan window to perform BT exchange, a part of device discovery and parameter exchange in the BT connection is omitted, and Bluetooth connection speed is increased on a basis that the BLE exchange succeeds first.

In the solution 2, the BLE scan window may be referred to as a first scan window, and the BT scan window may be referred to as a second scan window. A scanning periodicity in which the first scan window is located may be referred to as a first scanning periodicity, and a scanning periodicity in which the second scan window is located may be referred to as a second scanning periodicity. The ADV_IND packet may be referred to as a first-type data packet, and the ID packet may be referred to as a second-type data packet. The BLE connection may be referred to as a first-type Bluetooth connection, and the BT connection may be referred to as a second-type Bluetooth connection.

### Solution 3

In the solution 3, connection information (which may be referred to as a second connection parameter) for establishing a BT connection is exchanged on a BLE link by establishing a BLE connection, to increase BT connection speed.

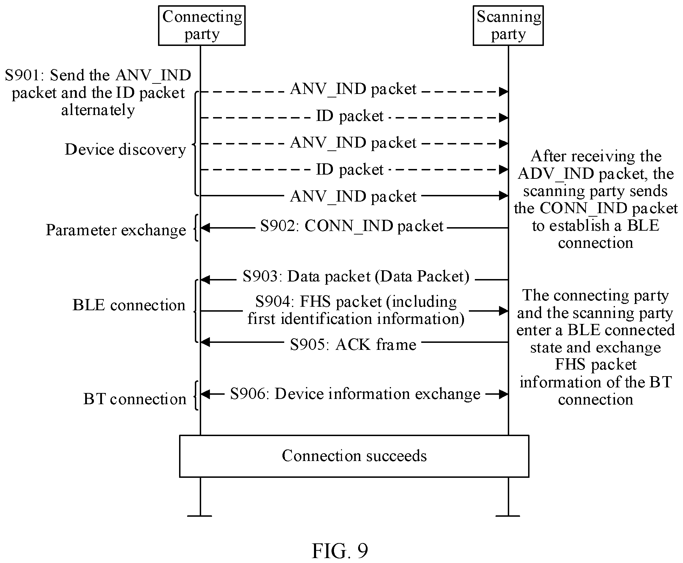

As shown in FIG. 9, during implementation, the solution 3 may include S901 to S906.

S901 is the same as S501.

S902 and S903 are respectively the same as S302 and S303, and processes of parameter exchange and connection confirmation in the BLE connection is completed.

S904: The connecting party sends, on the BLE link, identification information (which may be referred to as first identification information) and an FHS packet corresponding to the first identification information.

It should be noted that, because the FHS packet includes the connection information for establishing the BT connection between the scanning party and the connecting party, the FHS packet corresponding to the first identification information may also be understood as the connection information that is for establishing the BT connection between the scanning party and the connecting party and that corresponds to the first identification information.

The connecting party may send, on the BLE link based on the communication resource carried in the CONN_IND packet, the first identification information and the FHS packet corresponding to the first identification information to the scanning party, where the first identification information indicates the scanning party to establish the BT connection.

It should be noted that the first identification information may alternatively be included in the FHS packet for sending. After receiving the FHS packet, the scanning party parses the FHS packet to obtain the first identification information, and establishes the BT connection by using the connection information in the FHS packet based on an indication of the first identification information. FIG. 9 shows an example in which the first identification information is included in the FHS packet.

S905 and S906 are respectively the same as S104 and S107. In other words, when the scanning party receives the FHS packet, the scanning party replies with an ACK frame and completes the information exchange part on a BT link.

In the solution 3, it should be noted that, after the BT connection is successfully established, because the BLE link does not need to continue to be used for data transmission, the established BLE link may be destroyed, to reduce power consumption of a device.

According to the method provided in the solution 3, when the BLE scan window of the scanning party receives the ADV_IND packet first, the BLE connection is established, and the FHS packet for the BT connection is exchanged on a link of establishing the BLE connection, so that resource waste caused by discarding of the ADV_IND packet after the ADV_IND packet is scanned first is prevented, processes of device discovery, parameter exchange, and connection confirmation in the BT connection are omitted, the BT connection is established on a basis that BLE exchange succeeds first and the BLE connection is established, and Bluetooth connection speed is increased.

It should be noted that in step S904, sending is performed on the communication link on which the connection confirmation is completed in step S903, so that communication security can be ensured. To meet a connection requirement of the connecting party more quickly, step S904 may alternatively be performed after step S902. In other words, after the parameter exchange of establishing the BLE connection is completed, the communication link between the scanning party and the connecting party is established. In a process of performing connection confirmation between the two parties, the connecting party may send the FHS packet on the foregoing communication link, so that the scanning party receives the packet and establishes the BT connection.

In the solution 3, the BLE scan window may be referred to as a first scan window, and the BT scan window may be referred to as a second scan window. A scanning periodicity in which the first scan window is located may be referred to as a first scanning periodicity, and a scanning periodicity in which the second scan window is located may be referred to as a second scanning periodicity. The ADV_IND packet may be referred to as a first-type data packet, and the ID packet may be referred to as a second-type data packet. The BLE connection may be referred to as a first-type Bluetooth connection, and the BT connection may be referred to as a second-type Bluetooth connection.

The foregoing three solutions can all implement BT Over BLE. The connecting party sends the ADV_IND packet and the ID packet alternately, and the scanning party enables the BT scan window and the BLE scan window. On a basis that the ADV_IND packet is first received in the BLE scan window, or in other words, the BLE exchange succeeds first, the first identification information is carried in the ADV_IND packet to indicate the scanning party to enable the BT scan window and establish the BT connection, or the ADV_IND packet carries the connection information for establishing the BT connection, or the communication link of the BLE connection is established based on the ADV_IND packet, and the connection information of the BT connection is exchanged on the BLE link to implement the BT connection. In the foregoing three solutions, on a basis that an existing manner of sending the connection request by the connecting party and a manner of performing scanning by the scanning party are not changed, or in other words, current sending frequencies of the ID packet and the ADV_IND packet and enabling duration of the BT scan window and the BLE scan window are maintained, BT connection establishment speed is increased, and intelligence of the device is improved.

In the solution 4, an FHS packet triggers to enable a BLE scan window to receive an ADV_IND packet, to accelerate BLE connection establishment.

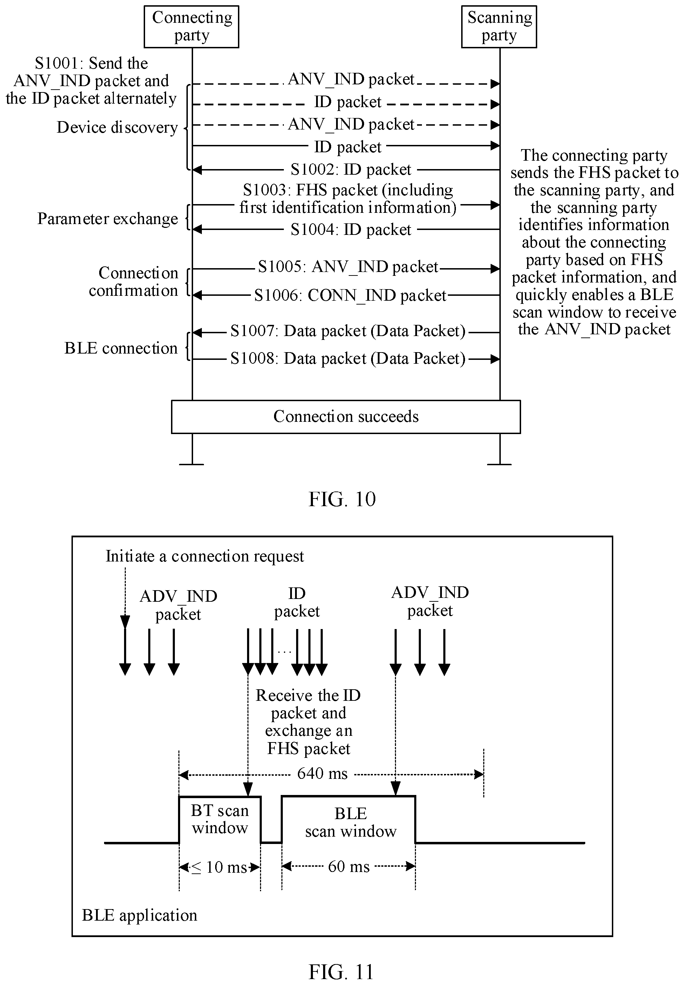

As shown in FIG. 10, during implementation, the solution 4 may include S1001 to S1008.

S1001 is the same as S501. When the connecting party determines to establish a BLE connection, the connecting party generates identification information (which may be referred to as first identification information) corresponding to the BLE connection, where the first identification information indicates the scanning party to enable the BLE scan window. In a subsequent process, the scanning party may receive the ADV_IND packet and establish the BLE connection.

S1002 and S1003 are respectively the same as S102 and S103. The FHS packet sent by the connecting party in step S 1003 includes the first identification information in step S1001.

S1004: The scanning party receives the FHS packet, quickly enables the BLE scan window to receive the ADV_IND packet, and replies with an ID packet.

The BT scan window of the scanning party first receives the ID packet, that is, BT exchange succeeds first, and then the BT scan window receives the FHS packet sent by the connecting party. The scanning party parses the FHS packet to obtain the first identification information in the FHS packet, enables the BLE scan window based on the first identification information, to determine to establish the BLE connection, and replies with the ID packet.

The quick enabling of the BLE scan window means to enable the BT scan window in a preset time period, where the preset time period is in a scanning periodicity in which the BLE scan window is located, and the preset time period may be preset.

As shown in FIG. 11, the BLE scan window is quickly enabled based on the FHS packet exchanged by the BT to receive the ADV_IND packet. For example, the BLE scan window may be enabled at a preset interval of two slots (slots) in the BT scan window, and a size of enabling the BLE scan window may be adjusted. This is not limited in this application.

It should be noted that, in the method shown in FIG. 11, after receiving the FHS packet, based on an indication of the first identification information, the BT scan window no longer performs BT scanning, that is, the BT scan window is closed after receiving the FHS packet. In the figure, because the BT exchange succeeds in the first BT scan window, enabling duration of the first BT scan window is less than or equal to 10 ms, and the second BT scan window is not enabled to perform the BT scanning. Enabling duration of the BLE scan window may be adjusted based on closing of the BT scan window.

S1005 to S1008 are respectively the same as S301 to S304.

According to the method provided in the solution 4, when the BT scan window of the scanning party first receives the ID packet, the scanning party receives the FHS packet sent by the connecting party, and enables the BLE scan window based on the first identification information included in the FHS packet. Through enabling of the BLE scan window, the ADV_IND packet can be received in the BLE scan window as soon as possible, and the ADV_IND packet does not need to be received in an originally later BLE scan window, so that Bluetooth connection speed is increased. According to the foregoing solution 4, the BLE connection is established on a basis that the connecting party and the scanning party exchange successfully first based on the ID packet of the BT. When a scanning periodicity of each type of Bluetooth is not shortened, or in other words, power consumption of the scanning party is not increased, the BLE device discovery process is accelerated, and Bluetooth response time is optimized by about 50%.

In the solution 4, the BT scan window may be referred to as a first scan window, and the BLE scan window may be referred to as a second scan window. A scanning periodicity in which the first scan window is located may be referred to as a first scanning periodicity, and a scanning periodicity in which the second scan window is located may be referred to as a second scanning periodicity. The ID packet may be referred to as a first-type data packet, and the ADV _IND packet may be referred to as a second-type data packet. The BT connection may be referred to as a first-type Bluetooth connection, and the BLE connection may be referred to as a second-type Bluetooth connection.

### Solution 5

In the solution 5, a BT connection is established, and connection information for establishing a BLE connection is exchanged on a BT link, to increase Bluetooth connection speed.

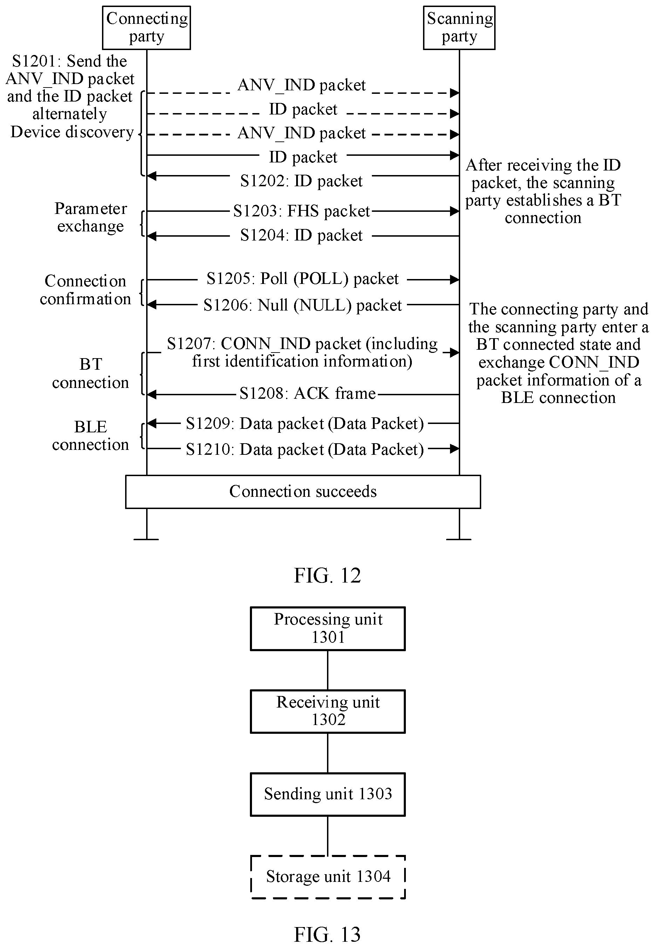

As shown in FIG. 12, during implementation, the solution 5 may include S1201 to S1210.

S1201 is the same as S501.

S1202 to S1206 are respectively the same as S102 to S106. The scanning party receives an FHS packet and establishes the BT link.

S1207: The connecting party sends identification information (which may be referred to as first identification information) and a CONN_IND packet corresponding to the first identification information on the BT link, and correspondingly, the scanning party receives the first identification information and the CONN_IND packet corresponding to the first identification information.

It should be noted that, because the CONN_IND packet includes the connection information for establishing the BLE connection between the scanning party and the connecting party, the CONN_IND packet corresponding to the first identification information may also be understood as the connection information that is for establishing the BLE connection between the scanning party and the connecting party and that corresponds to the first identification information.

The connecting party sends, on the BT link, the first identification information and the CONN_IND packet corresponding to the first identification information to the scanning party, where the first identification information indicates the scanning party to establish the BLE connection.

It should be noted that the first identification information may alternatively be included in the CONN_IND packet for sending. After receiving the CONN_IND packet, the scanning party parses the CONN_IND packet to obtain the first identification information, and establishes the BLE connection by using the connection information in the CONN_IND packet based on an indication of the first identification information. FIG. 12 shows an example in which the first identification information is included in the CONN_IND packet.

S1208: The scanning party replies with an ACK frame, and correspondingly, the connecting party receives the ACK frame.

S1209 and S1210 are respectively the same as S303 and S304.

In the solution 5, it should be noted that, after the BLE connection is successfully established in the foregoing manner, the established BT link may be destroyed, to reduce power consumption of a device.

According to the method provided in the solution 5, when the BT scan window of the scanning party receives the ID packet first, the BT connection is established, and the CONN_IND packet for the BLE connection is exchanged on a link of establishing the BT connection, so that resource waste caused by discarding of the ID packet after the ID packet is scanned first is prevented, processes of device discovery and parameter exchange in the BLE connection are omitted, the BT connection is established on a basis that the BLE exchange succeeds first and the BLE connection is established, and Bluetooth connection speed is increased.

It should be noted that in step S1207, sending is performed on the communication link on which connection confirmation is completed in step S1206, and the link can ensure communication security. To meet a connection requirement of the connecting party more quickly, step S1207 may alternatively be performed after step S1204. In other words, after the parameter exchange of establishing the BT connection is completed, the communication link between the scanning party and the connecting party is established. In a process of performing connection confirmation between the two parties, the connecting party may send the CONN_IND packet on the foregoing communication link, so that the scanning party receives the packet and establishes the BLE connection.

In the solution 5, the BT scan window may be referred to as a first scan window, and the BLE scan window may be referred to as a second scan window. A scanning periodicity in which the first scan window is located may be referred to as a first scanning periodicity, and a scanning periodicity in which the second scan window is located may be referred to as a second scanning periodicity. The ID packet may be referred to as a first-type data packet, and an ADV_IND packet may be referred to as a second-type data packet. The BT connection may be referred to as a first-type Bluetooth connection, and the BLE connection may be referred to as a second-type Bluetooth connection.

Both the foregoing solution 4 and solution 5 can implement BLE Over BT. The connecting party sends the ADV_IND packet and the ID packet alternately, and the scanning party enables the BT scan window and the BLE scan window. On a basis that the ID packet in the BT scan window is first received, or in other words, the BT exchange succeeds first, the FHS packet is exchanged by using the ID packet, and the scanning party is indicated, based on the first identification information carried in the FHS packet, to enable the BLE scan window to establish the BLE connection, or the communication link of the BT connection is established based on the ID packet, and the connection information of the BLE connection is exchanged on the BT link to implement the BLE connection. In the foregoing two solutions, similarly, on a basis that an existing manner of sending the connection request by the connecting party and a manner of performing scanning by the scanning party are not changed, or in other words, current sending frequencies of the ID packet and the ADV_IND packet and enabling duration of the BT scan window and the BLE scan window are maintained, BLE connection establishment speed is increased, and intelligence of the device is improved.

In an alternative implementation of this embodiment of this application, the scanning party enables only one type of scan window. For example, when the scanning party does not enable the BT scan window, and only enables the BLE scan window, by performing the foregoing solution 1 to solution 3, both the BT connection and the BLE connection can be established, and power consumption is optimized by about 13% to 50%; or when the scanning party does not enable the BLE scan window, and only enables the BT scan window, by performing the foregoing solution 4 and solution 5, both the BLE connection and the BT connection can be established, and the power consumption is optimized by about 50% to 87%.

The solutions provided in the foregoing embodiments may be summarized as follows: The scanning party is used as a first device, and the connecting party is used as a second device. The second device generates and sends first identification information based on a second-type Bluetooth connection to be established, and the second device alternately sends a first-type data packet and a second-type data packet that are used for the device discovery, where the first-type data packet is used to establish a first-type Bluetooth connection, and the second-type data packet is used to establish the second-type Bluetooth connection. The first device performs periodic scanning alternately, where a first scanning periodicity is used for the first-type Bluetooth connection and a second scanning periodicity is used for the second-type Bluetooth connection; the first device receives the first-type data packet from the second device in a first scan window of any first scanning periodicity; the first device obtains, based on the first-type data packet, a second connection parameter for establishing the second-type Bluetooth connection to the second device; and the first device establishes the second-type Bluetooth connection to the second device based on the second connection parameter. When the first-type data packet is an ID packet, a BLE connection is established; or when the second-type data packet is an ADV_IND packet, a BT connection is established.

That the first device obtains, based on the first-type data packet, the second connection parameter for establishing the second-type Bluetooth connection to the second device includes the following three cases.

Case 1: The first device enables a second-type scan window based on the first-type data packet, where the second-type scan window is used to receive the second-type data packet. When the first-type data packet is an ID packet, a BLE scan window is triggered to be enabled; or when the first-type data packet is an ADV_IND packet, a BT scan window is triggered to be enabled. The foregoing is described in the solution 1 and the solution 4 separately.

Case 2: The first device establishes the first-type Bluetooth connection based on the first-type data packet, exchanges connection information of the second-type Bluetooth connection on a link of the first-type Bluetooth connection, and establishes the second-type Bluetooth connection based on the connection information of the second-type Bluetooth connection. When the first-type data packet is an ID packet, a BT connection is established, a CONN_IND packet is received on the BT link, and a BLE connection is established based on the CONN_IND packet; or when the first-type data packet is an ADV_IND packet, a BLE connection is established, an FHS packet is received on the BLE link, and a BT connection is established based on the FHS packet. The foregoing is described in the solution 3 and the solution 5 separately.

Case 3: When the first-type data packet is an ADV_IND packet, where the ADV_IND packet carries the first identification information that indicates to establish a BT connection and connection information in an FHS packet corresponding to the first identification information, the first device directly establishes the BT connection based on the connection information in the FHS packet in the ADV_IND packet. The foregoing is described in the solution 2.

According to the methods provided in this embodiment of this application, when the connecting party initiates a connection, the connecting party sends the ID packet and the ADV_IND packet alternately. The scanning party organizes scanning intervals in an orderly manner, and enables the BT scan window and the BLE scan window alternately. When the BT connection is established, information about successful BLE exchange is shared, and when the BLE connection is established, information about successful BT exchange is shared, and an information sharing mechanism is established during the BT connection or BLE connection, to accelerate Bluetooth connection establishment.

According to the methods provided in this embodiment of this application, receiving one type of data packet can implement establishment of another type of Bluetooth connection based on the type of data packet, to increase the Bluetooth connection speed.

The foregoing mainly describes the solutions in this embodiment of this application from a perspective of the method. It may be understood that, to implement the foregoing functions, each module, for example, the Bluetooth communication apparatus, includes at least one of a corresponding hardware structure or a corresponding software module for performing each function. A person skilled in the art should easily be aware that units and algorithm steps in the examples described with reference to embodiments disclosed in this specification can be implemented by hardware or a combination of hardware and computer software in this application. Whether a function is executed in a manner of hardware or hardware driven by computer software depends on specific applications and design constraints of the technical solutions. A person skilled in the art may use different methods to implement the described functions for each specific application. However, it should not be considered that the implementation goes beyond the scope of embodiments of this application.

In embodiments of this application, division into functional units may be performed on the Bluetooth communication apparatus based on the foregoing method examples. For example, each functional unit may be obtained through division based on each corresponding function, or two or more functions may be integrated into one processing unit. The integrated unit may be implemented in a form of hardware, or may be implemented in a form of a software functional unit. It should be noted that, in embodiments of this application, division into the units is an example, and is merely logical function division. In actual implementation, another division manner may be used.

When an integrated unit is used, FIG. 13 shows a Bluetooth communication apparatus in the foregoing embodiments. The Bluetooth communication apparatus may include a processing unit 1301, a receiving unit 1302, and a sending unit 1303. Optionally, the Bluetooth communication apparatus further includes a storage unit 1304. The schematic diagram of the structure shown in FIG. 13 may show structures of the first device and the second device in the foregoing embodiments.

When the schematic diagram of the structure shown in FIG. 13 shows the structure of the first device in the foregoing embodiments, the processing unit 1301 is configured to control and manage an action of the first device. For example, the processing unit 1301 is configured to: support the first device in performing S502 and S503, S505, and S507 and S508 in FIG. 5, S802, S804, and S805 in FIG. 8, S902, S903, S905, and S906 in FIG. 9, S1002, S1004, S1006, and S1007 in FIG. 10, S1202, S1204, S1206, S1208, and S1209 in FIG. 12, and/or actions performed by the first device in another process described in embodiments of this application. The processing unit 1301 may communicate with another apparatus through the receiving unit 1302 and the sending unit 1303. The storage unit 1304 is configured to store program code and data of the first device.

When the schematic diagram of the structure shown in FIG. 13 shows the structure of the first device in the foregoing embodiments, the Bluetooth communication apparatus may be a device, or may be a chip in the device.

When the schematic diagram of the structure shown in FIG. 13 show a structure of the second device in the foregoing embodiments, the processing unit 1301 is configured to control and manage an action of the second device. For example, the processing unit 1301 is configured to: support the second device in performing S501, S504, S506, and S508 in FIG. 5, S801, S803, and S805 in FIG. 8, S901, S904, and S906 in FIG. 9, S1001, S1003, S105, and S1008 in FIG. 10, S1201, S1203, S1205, S1207, and S1210 in FIG. 12, and/or actions performed by the second device in another process described in embodiments of this application. The processing unit 1301 may communicate with another apparatus through the receiving unit 1302 and the sending unit 1303. The storage unit 1304 is configured to store program code and data of the second device.

When the schematic diagram of the structure shown in FIG. 13 shows the structure of the second device in the foregoing embodiments, the Bluetooth communication apparatus may be a device, or may be a chip in the device.

When the integrated unit in FIG. 13 is implemented in a form of a software functional module and sold or used as an independent product, the integrated unit may be stored in a computer-readable storage medium. Based on such an understanding, the technical solutions in embodiments of this application essentially, or the part contributing to a current technology, or all or some of the technical solutions may be implemented in a form of a software product. The computer software product is stored in a storage medium, and includes several instructions for instructing a computer device (which may be a personal computer, a server, a network device, or the like) or a processor (processor) to perform all or some of the steps of the methods described in embodiments of this application. The storage medium for storing the computer software product includes any medium that can store program code, such as a USB flash drive, a removable hard disk, a read-only memory (read-only memory, ROM), a random access memory (random access memory, RAM), a magnetic disk, or an optical disc.

The unit in FIG. 13 may also be referred to as a module. For example, the processing unit may be referred to as a processing module. The receiving unit and the sending unit may be collectively referred to as a transceiver unit or a communication unit.

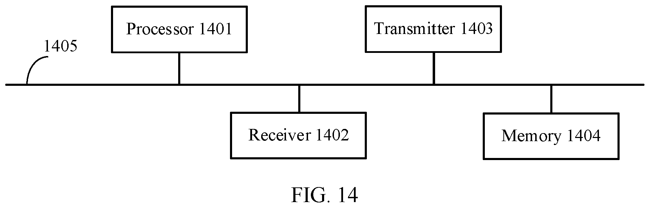

FIG. 14 is a schematic diagram of a hardware structure of a Bluetooth communication apparatus according to an embodiment of this application. The Bluetooth communication apparatus includes one or more processors 1401, a receiver 1402, and a transmitter 1403.

Optionally, the receiver 1402 and the transmitter 1403 may be collectively referred to as a transceiver.

Optionally, the Bluetooth communication apparatus further includes a memory 1404, and the memory 1404 may include a read-only memory and a random access memory, and provide operation instructions and data for the processor 1401. A part of the memory 1404 may further include a non-volatile random access memory (non-volatile random access memory, NVRAM).

In this embodiment of this application, the Bluetooth communication apparatus performs a corresponding operation by invoking the operation instructions (where the operation instructions may be stored in an operating system) stored in the memory 1404.

The processor 1401 may also be referred to as a central processing unit (central processing unit, CPU).

The processor 1401, the receiver 1402, the transmitter 1403, and the memory 1404 are coupled together through a bus system 1405. In addition to a data bus, the bus system 1405 may further include a power bus, a control bus, a status signal bus, and the like. However, for clarity of description, various buses are marked as the bus system 1405 in FIG. 14.

The methods disclosed in the foregoing embodiments of this application may be applied to the processor 1401, or may be implemented by the processor 1401. The processor 1401 may be an integrated circuit chip, and has a signal processing capability. In an implementation process, the steps of the foregoing methods may be completed by using an integrated logic circuit of hardware in the processor 1401 or instructions in a form of software. The processor 1401 may be a general-purpose processor, a digital signal processor (digital signal processor, DSP), an application-specific integrated circuit (application-specific integrated circuit, ASIC), a field programmable gate array (field programmable gate array, FPGA) or another programmable logical device, a discrete gate or a transistor logic device, or a discrete hardware component. The processor can implement or perform the methods, the steps, and logical block diagrams that are disclosed in embodiments of this application. The general purpose processor may be a microprocessor, or the processor may be any conventional processor or the like. The steps of the methods disclosed with reference to embodiments of this application may be directly performed and completed by a hardware decoding processor, or may be performed and completed by a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory 1404, and the processor 1401 reads information in the memory 1404, and completes the steps of the foregoing methods in combination with hardware of the processor 1401.

For example, the schematic diagram of the structure shown in FIG. 14 may show the first device and the second device in the foregoing embodiments.

When the schematic diagram of the structure shown in FIG. 14 shows a structure of the first device in the foregoing embodiments, the processor 1401, the receiver 1402, and the transmitter 1403 are configured to control and manage an action of the first device. For example, the processor 1401 is configured to support the first device in performing S502 in FIG. 5; the receiver 1402 is configured to: support the first device in performing S502, S504, S506, and S508 in FIG. 5, S801, S803, and S805 in FIG. 8, S901, S904, and S906 in FIG. 9, S1001, S1003, S1005, and S1008 in FIG. 10, and S1201, S1203, S1205, S1207, and S1210 in FIG. 12; and the transmitter 1403 is configured to: support the first device in performing S503, S505, and S507 and S508 in FIG. 5, S802, S804, and S805 in FIG. 8. S902, S903, S905, and S906 in FIG. 9, S1002, S1004, S1006, and S1007 in FIG. 10, S1202, S1204, S1206, S1208, and S1209 in FIG. 12, and/or actions performed by the first device in another process described in embodiments of this application. The memory 1404 is configured to store program code and data of the first device.

When the schematic diagram of the structure shown in FIG. 14 shows a structure of the second device in the foregoing embodiments, the processor 1401, the receiver 1402, and the transmitter 1403 are configured to control and manage an action of the second device. For example, the processor 1401 is configured to: support the second device in performing S501 in FIG. 5, S801 in FIG. 8, S904 in FIG. 9, S1003 in FIG. 10, and S1207 in FIG. 12; the receiver 1402 is configured to: support the second device in performing S503, S505, and S507 and S508 in FIG. 5, S802, S804, and S805 in FIG. 8, S902, S903, S905, and S906 in FIG. 9, S1002, S1004, S1006, and S1007 in FIG. 10, and S1202, S1204, S1206, S1208, and S1209 in FIG. 12; and the transmitter 1403 is configured to: support the second device in performing S502, S504, S506, and S508 in FIG. 5, S801, S803, and S805 in FIG. 8, S901, S904, and S906 in FIG. 9, S1001, S1003, S1005, and S1008 in FIG. 10, S1201, S1203, S1205, S1207, and S1210 in FIG. 12, and/or actions performed by the second device in another process described in embodiments of this application. The memory 1404 is configured to store program code and data of the second device.

The foregoing communication unit or communication interface may be an interface circuit or a communication interface of the apparatus, and is configured to receive a signal from another apparatus. For example, when the apparatus is implemented in a form of a chip, the communication unit or the communication interface is an interface circuit or a communication interface that is used by the chip to receive a signal or send a signal from another chip or apparatus.

In the foregoing embodiment, instructions that are stored in the memory and that are executed by the processor may be implemented in a form of a computer program product. The computer program product may be written into the memory in advance, or may be downloaded in a form of software and installed in the memory.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device that is integrated by one or more usable media, such as a server or a data center. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Optionally, an embodiment of this application further provides a computer-readable storage medium, and the computer-readable storage medium stores computer instructions. When the computer-readable storage medium runs on a computer, the computer is enabled to perform any method provided in embodiments of this application.

An embodiment of this application further provides a computer program product that includes computer instructions. When the computer program product runs on a computer, the computer is enabled to perform any method provided in embodiments of this application.

An embodiment of this application further provides a chip. The chip includes a processor. When the processor executes instructions, the chip is enabled to perform any method provided in embodiments of this application.

All or some of the foregoing embodiments may be implemented through software, hardware, firmware, or any combination thereof. When a software program is used for implementation, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by a computer, or a data storage device that is integrated by one or more usable media, such as a server or a data center. The usable medium may be a magnetic medium (for example, a floppy disk, a hard disk, or a magnetic tape), an optical medium (for example, a DVD), a semiconductor medium (for example, an SSD), or the like.

In the claims, the term "comprise" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

## Claims

1. A Bluetooth connection establishment method, comprising:
performing, by a first device, periodic scanning alternately, wherein a first periodic
scanning interval is used for establishing a first-type Bluetooth connection, and a second periodic
scanning interval is used for establishing a second-type Bluetooth connection;
receiving, by the first device, a first-type data packet from a second device in a first scan window of any first periodic
scanning interval, and establishing, by the first device, the first-type Bluetooth connection with the second device using the first-type data packet;
obtaining, by the first device based on the first-type data packet, a second connection parameter for establishing the second-type Bluetooth connection to the second device; and
establishing, by the first device, the second-type Bluetooth connection to the second device based on the second connection parameter;
wherein the obtaining, by the first device, the second connection parameter based on the first-type data packet comprises:
enabling, by the first device, a second scan window based on the first-type data packet, wherein the second scan window is used to receive a second-type data packet, and the second-type data packet comprises the second connection parameter; and
parsing, by the first device, the second-type data packet to obtain the second connection parameter;
wherein the first-type data packet is an advertising packet, the second-type data packet is a paging packet, the first-type Bluetooth connection is a Bluetooth low energy connection, and the second-type Bluetooth connection is a classic Bluetooth connection.

2. The method according to claim 1, wherein the first-type data packet comprises first identification information and the second connection parameter corresponding to the first identification information, the first identification information indicates the first device to establish the second-type Bluetooth connection, and the method further comprises:
parsing, by the first device, the first-type data packet to obtain the first identification information, and determining, based on the first identification information, to establish the second-type Bluetooth connection; and
the obtaining, by the first device, the second connection parameter based on the first-type data packet comprises: parsing, by the first device, the first-type data packet to obtain the second connection parameter corresponding to the first identification information.

3. The method according to claim 1, wherein the first-type data packet comprises first identification information, the first identification information indicates to enable the second scan window, and the enabling, by the first device, a second scan window based on the first-type data packet comprises:
enabling, by the first device, the second scan window based on the first identification information.

4. The method according to claim 1, wherein the enabling, by the first device, a second scan window based on the first-type data packet comprises:
sending, by the first device, feedback of the first-type data packet to the second device based on the first-type data packet;
receiving, by the first device, first identification information from the second device, wherein the first identification information indicates to enable the second scan window; and
enabling, by the first device, the second scan window based on the first identification information.

5. The method according to claim 1 or 4, wherein the first-type data packet is a paging packet, the second-type data packet is an advertising packet, the first-type Bluetooth connection is a classic Bluetooth connection, and the second-type Bluetooth connection is a Bluetooth low energy connection.

6. The method according to any one of claims 1 to 5, wherein the enabling, by the first device, a second scan window based on the first-type data packet comprises:
enabling, by the first device, the second scan window in a preset time period after receiving the first-type data packet, wherein the preset time period is within the first periodic scanning interval

7. The method according to claim 1, wherein the obtaining, by the first device, the second connection parameter based on the first-type data packet comprises:
obtaining, by the first device, a first connection parameter based on the first-type data packet, wherein the first connection parameter is used to establish the first-type Bluetooth connection;
establishing, by the first device, a communication link of the first-type Bluetooth connection with the second device based on the first connection parameter; and
obtaining, by the first device through the communication link, first identification information and the second connection parameter corresponding to the first identification information that are sent by the second device, wherein the first identification information indicates the first device to establish the second-type Bluetooth connection.

8. The method according to claim 2 or 7, wherein the first-type data packet is an advertising packet, the first-type Bluetooth connection is a Bluetooth low energy connection, and the second-type Bluetooth connection is a classic Bluetooth connection.

9. A Bluetooth connection establishment method, comprising:
generating, by a second device, first identification information based on a second-type Bluetooth connection to be established;
sending, by the second device, a first-type data packet and a second-type data packet alternately, wherein the first-type data packet is used by a first device to establish a first-type Bluetooth connection with the second device, and the second-type data packet is used to establish the second-type Bluetooth connection; and
sending, by the second device, the first identification information.
wherein the first identification information indicates the first device to enable a second scan window, and the second scan window is used by the second device to send the second-type data packet; and
wherein the first-type data packet is an advertising packet, the second-type data packet is a paging packet, the first-type Bluetooth connection is a Bluetooth low energy connection, and the second-type Bluetooth connection is a classic Bluetooth connection.

10. A Bluetooth communication apparatus, comprising:
a processor (1401), configured to perform periodic scanning alternately, wherein a first periodic scanning interval is used for establishing a first-type Bluetooth connection and a second periodic scanning interval is used for establishing a second-type Bluetooth connection; and
a receiver (1402), configured to receive a first-type data packet from a second device in a first scan window of any first periodic scanning interval, wherein the processor (1401) is further configured to establish the first-type Bluetooth connection between a first device and the second device using the first-type data packet;
the processor (1401) is further configured to obtain, based on the first-type data packet, a second connection parameter for establishing the second-type Bluetooth connection to the second device, comprising:
the processor (1401) is furhter configured to enable a second scan window based on the first-type data packet, wherein the second scan window is used to receive a second-type data packet, and the second-type data packet comprises the second connection parameter; and
the processor (1401) is furhter configured to parse the second-type data packet to obtain the second connection parameter; and
the processor (1401) is further configured to establish the second-type Bluetooth connection to the second device based on the second connection parameter;
wherein the first-type data packet is an advertising packet, the second-type data packet is a paging packet, the first-type Bluetooth connection is a Bluetooth low energy connection, and the second-type Bluetooth connection is a classic Bluetooth connection.

11. A Bluetooth communication apparatus, comprising:
a processor (1401), configured to generate first identification information based on a second-type Bluetooth connection to be established; and
a transmitter (1403), configured to send a first-type data packet and a second-type data packet alternately, wherein the first-type data packet is used to establish, by a first device, a first-type Bluetooth connection with the second device, and the second-type data packet is used to establish the second-type Bluetooth connection, wherein
the transmitter (1403) is further configured to send the first identification information;
wherein the first identification information indicates the first device to enable a second scan window, and the second scan window is used by the second device to send the second-type data packet; and
wherein the first-type data packet is an advertising packet, the second-type data packet is a paging packet, the first-type Bluetooth connection is a Bluetooth low energy connection, and the second-type Bluetooth connection is a classic Bluetooth connection.

12. A computer-readable storage medium, configured to store computer instructions, wherein when the computer instructions are run on a computer, the computer is enabled to perform the method according to any one of claims 1 to 9.

13. A computer program product, comprising computer instructions, wherein when the computer instructions are run on a computer, the computer is enabled to perform the method according to any one of claims 1 to 9.

## Patentansprüche

1. Bluetooth-Verbindungseinrichtungsverfahren, umfassend:
Durchführen, durch ein erstes Gerät, von abwechselnder periodischer Abtastung, wobei ein erstes periodisches Abtastintervall verwendet wird, um eine Bluetooth-Verbindung ersten Typs einzurichten, und ein zweites periodisches Abtastintervall verwendet wird, um eine Bluetooth-Verbindung zweiten Typs einzurichten;
Empfangen, durch das erste Gerät, eines Datenpakets ersten Typs von einem zweiten Gerät in einem ersten Abtastfenster eines beliebigen ersten periodischen Abtastintervalls und Einrichten, durch das erste Gerät, der Bluetooth-Verbindung ersten Typs mit dem zweiten Gerät unter Verwendung des Datenpakets ersten Typs; Erlangen, durch das erste Gerät basierend auf dem Datenpaket ersten Typs, eines zweiten Verbindungsparameters zum Einrichten der Bluetooth-Verbindung zweiten Typs mit dem zweiten Gerät; und Einrichten, durch das erste Gerät, der Bluetooth-Verbindung zweiten Typs mit dem zweiten Gerät basierend auf dem zweiten Verbindungsparameter;
wobei das Erlangen, durch das erste Gerät, des zweiten Verbindungsparameters basierend auf dem Datenpaket ersten Typs Folgendes umfasst:
Aktivieren, durch das erste Gerät, eines zweiten Abtastfensters basierend auf dem Datenpaket ersten Typs, wobei das zweite Abtastfenster verwendet wird, um ein Datenpaket zweiten Typs zu empfangen, und das Datenpaket zweiten Typs den zweiten Verbindungsparameter umfasst; und
Parsen, durch das erste Gerät, des Datenpakets zweiten Typs, um den zweiten Verbindungsparameter zu erlangen;
wobei das Datenpaket ersten Typs ein Werbepaket ist, das Datenpaket zweiten Typs ein Paging-Paket ist, die Bluetooth-Verbindung ersten Typs eine Bluetooth-Low-Energy-Verbindung ist und die Bluetooth-Verbindung zweiten Typs eine klassische Bluetooth-Verbindung ist.

2. Verfahren nach Anspruch 1, wobei das Datenpaket ersten Typs erste Identifikationsinformationen und den zweiten Verbindungsparameter, der den ersten Identifikationsinformationen entspricht, umfasst, wobei die ersten Identifikationsinformationen dem ersten Gerät angeben, die Bluetooth-Verbindung zweiten Typs einzurichten, und das Verfahren ferner Folgendes umfasst:
Parsen, durch das erste Gerät, des Datenpakets ersten Typs, um die ersten Identifikationsinformationen zu erlangen, und Bestimmen basierend auf den ersten Identifikationsinformationen, die Bluetooth-Verbindung zweiten Typs einzurichten; und
wobei das Erlangen, durch das erste Gerät, des zweiten Verbindungsparameters basierend auf dem Datenpaket ersten Typs Folgendes umfasst: Parsen, durch das erste Gerät, des Datenpakets ersten Typs, um den zweiten Verbindungsparameter zu erlangen, der den ersten Identifikationsinformationen entspricht.

3. Verfahren nach Anspruch 1, wobei das Datenpaket ersten Typs erste Identifikationsinformationen umfasst, die ersten Identifikationsinformationen angeben, das zweite Abtastfenster zu aktivieren, und das Aktivieren, durch das erste Gerät, eines zweiten Abtastfensters basierend auf dem Datenpaket ersten Typs Folgendes umfasst:
Aktivieren, durch das erste Gerät, des zweiten Abtastfensters basierend auf den ersten Identifikationsinformationen.

4. Verfahren nach Anspruch 1, wobei das Aktivieren, durch das erste Gerät, eines zweiten Abtastfensters basierend auf dem Datenpaket ersten Typs Folgendes umfasst:
Senden, durch das erste Gerät, einer Rückkopplung des Datenpakets ersten Typs an das zweite Gerät basierend auf dem Datenpaket ersten Typs;
Empfangen, durch das erste Gerät, von ersten Identifikationsinformationen von dem zweiten Gerät, wobei die ersten Identifikationsinformationen angeben, das zweite Abtastfenster zu aktivieren; und
Aktivieren, durch das erste Gerät, des zweiten Abtastfensters basierend auf den ersten Identifikationsinformationen.

5. Verfahren nach Anspruch 1 oder 4, wobei das Datenpaket ersten Typs ein Paging-Paket ist, das Datenpaket zweiten Typs ein Werbepaket ist, die Bluetooth-Verbindung ersten Typs eine klassische Bluetooth-Verbindung ist und die Bluetooth-Verbindung zweiten Typs eine Bluetooth-Low-Energy-Verbindung ist.

6. Verfahren nach einem der Ansprüche 1 bis 5, wobei das Aktivieren, durch das erste Gerät, eines zweiten Abtastfensters basierend auf dem Datenpaket ersten Typs Folgendes umfasst:
Aktivieren, durch das erste Gerät, des zweiten Abtastfensters in einem voreingestellten Zeitraum nach Empfangen des Datenpakets ersten Typs, wobei der voreingestellte Zeitraum innerhalb des ersten periodischen Abtastintervalls liegt.

7. Verfahren nach Anspruch 1, wobei das Erlangen, durch das erste Gerät, des zweiten Verbindungsparameters basierend auf dem Datenpaket ersten Typs Folgendes umfasst:
Erlangen, durch das erste Gerät, eines ersten Verbindungsparameters basierend auf dem Datenpaket ersten Typs, wobei der erste Verbindungsparameter verwendet wird, um die Bluetooth-Verbindung ersten Typs einzurichten;
Einrichten, durch das erste Gerät, einer Kommunikationsverknüpfung der Bluetooth-Verbindung ersten Typs mit dem zweiten Gerät basierend auf dem ersten Verbindungsparameter; und
Erlangen, durch das erste Gerät über die Kommunikationsverknüpfung, von ersten Identifikationsinformationen und des zweiten Verbindungsparameters, der den ersten Identifikationsinformationen entspricht, die durch das zweite Gerät gesendet werden, wobei die ersten Identifikationsinformationen dem ersten Gerät angeben, die Bluetooth-Verbindung zweiten Typs einzurichten.

8. Verfahren nach Anspruch 2 oder 7, wobei das Datenpaket ersten Typs ein Werbepaket ist, die Bluetooth-Verbindung ersten Typs eine Bluetooth-Low-Energy-Verbindung ist und die Bluetooth-Verbindung zweiten Typs eine klassische Bluetooth-Verbindung ist.

9. Bluetooth-Verbindungseinrichtungsverfahren, umfassend:
Generieren, durch ein zweites Gerät, von ersten Identifikationsinformationen basierend auf einer einzurichtenden Bluetooth-Verbindung zweiten Typs;
abwechselndes Senden, durch das zweite Gerät, eines Datenpakets ersten Typs und eines Datenpakets zweiten Typs, wobei das Datenpaket ersten Typs durch ein erstes Gerät verwendet wird, um eine Bluetooth-Verbindung ersten Typs mit dem zweiten Gerät einzurichten, und das Datenpaket zweiten Typs verwendet wird, um die Bluetooth-Verbindung zweiten Typs einzurichten; und
Senden, durch das zweite Gerät, der ersten Identifikationsinformationen;
wobei die ersten Identifikationsinformationen dem ersten Gerät angeben, ein zweites Abtastfenster zu aktivieren, und das zweite Abtastfenster durch das zweite Gerät verwendet wird, um das Datenpaket zweiten Typs zu senden; und
wobei das Datenpaket ersten Typs ein Werbepaket ist, das Datenpaket zweiten Typs ein Paging-Paket ist, die Bluetooth-Verbindung ersten Typs eine Bluetooth-Low-Energy-Verbindung ist und die Bluetooth-Verbindung zweiten Typs eine klassische Bluetooth-Verbindung ist.

10. Bluetooth-Kommunikationsvorrichtung, umfassend:
einen Prozessor (1401), der dazu konfiguriert ist, abwechselnde periodische Abtastung durchzuführen, wobei ein erstes periodisches Abtastintervall verwendet wird, um eine Bluetooth-Verbindung ersten Typs einzurichten, und ein zweites periodisches Abtastintervall verwendet wird, um eine Bluetooth-Verbindung zweiten Typs einzurichten; und
einen Empfänger (1402), der dazu konfiguriert ist, ein Datenpaket ersten Typs von einem zweiten Gerät in einem ersten Abtastfenster eines beliebigen ersten periodischen Abtastintervalls zu empfangen, und wobei der Prozessor (1401) ferner dazu konfiguriert ist, unter Verwendung des Datenpakets ersten Typs die Bluetooth-Verbindung ersten Typs zwischen einem ersten Gerät und dem zweiten Gerät einzurichten;
wobei der Prozessor (1401) ferner dazu konfiguriert ist, basierend auf dem Datenpaket ersten Typs einen zweiten Verbindungsparameter zum Einrichten der Bluetooth-Verbindung zweiten Typs mit dem zweiten Gerät zu erlangen;
wobei der Prozessor (1401) ferner dazu konfiguriert ist, ein zweites Abtastfenster basierend auf dem Datenpaket ersten Typs zu aktivieren, wobei das zweite Abtastfenster verwendet wird, um ein Datenpaket zweiten Typs zu empfangen, und das Datenpaket zweiten Typs den zweiten Verbindungsparameter umfasst; und
wobei der Prozessor (1401) ferner dazu konfiguriert ist, das Datenpaket zweiten Typs zu parsen, um den zweiten Verbindungsparameter zu erlangen; und
wobei der Prozessor (1401) ferner dazu konfiguriert ist, basierend auf dem zweiten Verbindungsparameter die Bluetooth-Verbindung zweiten Typs mit dem zweiten Gerät einzurichten;
wobei das Datenpaket ersten Typs ein Werbepaket ist, das Datenpaket zweiten Typs ein Paging-Paket ist, die Bluetooth-Verbindung ersten Typs eine Bluetooth-Low-Energy-Verbindung ist und die Bluetooth-Verbindung zweiten Typs eine klassische Bluetooth-Verbindung ist.

11. Bluetooth-Kommunikationsvorrichtung, umfassend:
einen Prozessor (1401), der dazu konfiguriert ist, erste Identifikationsinformationen basierend auf einer einzurichtenden Bluetooth-Verbindung zweiten Typs zu generieren; und
einen Sender (1403), der dazu konfiguriert ist, abwechselnd ein Datenpaket ersten Typs und ein Datenpaket zweiten Typs zu senden, wobei das Datenpaket ersten Typs durch ein erstes Gerät verwendet wird, um eine Bluetooth-Verbindung ersten Typs mit dem zweiten Gerät einzurichten, und das Datenpaket zweiten Typs verwendet wird, um die Bluetooth-Verbindung zweiten Typs einzurichten, wobei
der Sender (1403) ferner dazu konfiguriert ist, die ersten Identifikationsinformationen zu senden;
wobei die ersten Identifikationsinformationen dem ersten Gerät angeben, ein zweites Abtastfenster zu aktivieren, und das zweite Abtastfenster durch das zweite Gerät verwendet wird, um das Datenpaket zweiten Typs zu senden; und
wobei das Datenpaket ersten Typs ein Werbepaket ist, das Datenpaket zweiten Typs ein Paging-Paket ist, die Bluetooth-Verbindung ersten Typs eine Bluetooth-Low-Energy-Verbindung ist und die Bluetooth-Verbindung zweiten Typs eine klassische Bluetooth-Verbindung ist.

12. Computerlesbares Speichermedium, das dazu konfiguriert ist, Computeranweisungen zu speichern, wobei, wenn die Computeranweisungen auf einem Computer ausgeführt werden, der Computer in die Lage versetzt wird, das Verfahren nach einem der Ansprüche 1 bis 9 durchzuführen.

13. Computerprogrammprodukt, das Computeranweisungen umfasst, wobei, wenn die Computeranweisungen auf einem Computer ausgeführt werden, der Computer in die Lage versetzt wird, das Verfahren nach einem der Ansprüche 1 bis 9 durchzuführen.

## Revendications

1. Procédé d'établissement de connexion Bluetooth, comprenant :
l'exécution, par un premier dispositif, en alternance d'un balayage périodique, dans lequel un premier intervalle de balayage périodique est utilisé pour établir une connexion Bluetooth de premier type, et un second intervalle de balayage périodique est utilisé pour établir une connexion Bluetooth de second type ;
la réception, par le premier dispositif, d'un paquet de données de premier type d'un second dispositif dans une première fenêtre de balayage d'un premier intervalle de balayage périodique quelconque, et l'établissement, par le premier dispositif, de la connexion Bluetooth de premier type avec le second dispositif à l'aide du paquet de données de premier type ;
l'obtention, par le premier dispositif sur la base du paquet de données de premier type, d'un second paramètre de connexion pour établir la connexion Bluetooth de second type au second dispositif ; et
l'établissement, par le premier dispositif, de la connexion Bluetooth de second type au second dispositif sur la base du second paramètre de connexion ;
dans lequel l'obtention, par le premier dispositif, du second paramètre de connexion sur la base du paquet de données de premier type comprend :
l'activation, par le premier dispositif, d'une seconde fenêtre de balayage sur la base du paquet de données de premier type, dans lequel la seconde fenêtre de balayage est utilisée pour recevoir un paquet de données de second type, et le paquet de données de second type comprend le second paramètre de connexion ; et
l'analyse, par le premier dispositif, du paquet de données de second type pour obtenir le second paramètre de connexion ;
dans lequel le paquet de données de premier type est un paquet publicitaire, le paquet de données de second type est un paquet de radiomessagerie, la connexion Bluetooth de premier type est une connexion Bluetooth basse énergie, et la connexion Bluetooth de second type est une connexion Bluetooth classique.

2. Procédé selon la revendication 1, dans lequel le paquet de données de premier type comprend des premières informations d'identification et le second paramètre de connexion correspondant aux premières informations d'identification, les premières informations d'identification indiquent au premier dispositif d'établir la connexion Bluetooth de second type, et le procédé comprend également :
l'analyse, par le premier dispositif, du paquet de données de premier type pour obtenir les premières informations d'identification, et la détermination, sur la base des premières informations d'identification, d'établir la connexion Bluetooth de second type ; et
l'obtention, par le premier dispositif, du second paramètre de connexion sur la base du paquet de données de premier type comprend : l'analyse, par le premier dispositif, du paquet de données de premier type pour obtenir le second paramètre de connexion correspondant aux premières informations d'identification.

3. Procédé selon la revendication 1, dans lequel le paquet de données de premier type comprend des premières informations d'identification, les premières informations d'identification indiquent d'activer la seconde fenêtre de balayage, et l'activation, par le premier dispositif, d'une seconde fenêtre de balayage sur la base du paquet de données de premier type comprend :
l'activation, par le premier dispositif, de la seconde fenêtre de balayage sur la base des premières informations d'identification.

4. Procédé selon la revendication 1, dans lequel l'activation, par le premier dispositif, d'une seconde fenêtre de balayage sur la base du paquet de données de premier type comprend :
l'envoi, par le premier dispositif, d'une rétroaction du paquet de données de premier type au second dispositif sur la base du paquet de données de premier type ;
la réception, par le premier dispositif, de premières informations d'identification du second dispositif, dans lequel les premières informations d'identification indiquent d'activer la seconde fenêtre de balayage ; et
l'activation, par le premier dispositif, de la seconde fenêtre de balayage sur la base des premières informations d'identification.

5. Procédé selon la revendication 1 ou 4, dans lequel le paquet de données de premier type est un paquet de radiomessagerie, le paquet de données de second type est un paquet publicitaire, la connexion Bluetooth de premier type est une connexion Bluetooth classique, et la connexion Bluetooth de second type est une connexion Bluetooth basse énergie.

6. Procédé selon l'une quelconque des revendications 1 à 5, dans lequel l'activation, par le premier dispositif, d'une seconde fenêtre de balayage sur la base du paquet de données de premier type comprend :
l'activation, par le premier dispositif, de la seconde fenêtre de balayage dans une période prédéfinie après réception du paquet de données de premier type, dans lequel la période prédéfinie se trouve dans le premier intervalle de balayage périodique.

7. Procédé selon la revendication 1, dans lequel l'obtention, par le premier dispositif, du second paramètre de connexion sur la base du paquet de données de premier type comprend :
l'obtention, par le premier dispositif, d'un premier paramètre de connexion sur la base du paquet de données de premier type, dans lequel le premier paramètre de connexion est utilisé pour établir la connexion Bluetooth de premier type ;
l'établissement, par le premier dispositif, d'une liaison de communication de la connexion Bluetooth de premier type avec le second dispositif sur la base du premier paramètre de connexion ; et
l'obtention, par le premier dispositif à travers la liaison de communication, de premières informations d'identification et du second paramètre de connexion correspondant aux premières informations d'identification qui sont envoyées par le second dispositif, dans lequel les premières informations d'identification indiquent au premier dispositif d'établir la connexion Bluetooth de second type.

8. Procédé selon la revendication 2 ou 7, dans lequel le paquet de données de premier type est un paquet publicitaire, la connexion Bluetooth de premier type est une connexion Bluetooth basse énergie, et la connexion Bluetooth de second type est une connexion Bluetooth classique.

9. Procédé d'établissement de connexion Bluetooth, comprenant :
la génération, par un second dispositif, de premières informations d'identification sur la base d'une connexion Bluetooth de second type à établir ;
l'envoi, par le second dispositif, en alternance d'un paquet de données de premier type et d'un paquet de données de second type, dans lequel le paquet de données de premier type est utilisé par un premier dispositif pour établir une connexion Bluetooth de premier type avec le second dispositif, et le paquet de données de second type est utilisé pour établir la connexion Bluetooth de second type ; et
l'envoi, par le second dispositif, des premières informations d'identification.
dans lequel les premières informations d'identification indiquent au premier dispositif d'activer une seconde fenêtre de balayage, et la seconde fenêtre de balayage est utilisée par le second dispositif pour envoyer le paquet de données de second type ; et
dans lequel le paquet de données de premier type est un paquet publicitaire, le paquet de données de second type est un paquet de radiomessagerie, la connexion Bluetooth de premier type est une connexion Bluetooth basse énergie, et la connexion Bluetooth de second type est une connexion Bluetooth classique.

10. Appareil de communication Bluetooth, comprenant :
un processeur (1401), configuré pour exécuter en alternance un balayage périodique, dans lequel un premier intervalle de balayage périodique est utilisé pour établir une connexion Bluetooth de premier type et un second intervalle de balayage périodique est utilisé pour établir une connexion Bluetooth de second type ; et
un récepteur (1402), configuré pour recevoir un paquet de données de premier type à partir d'un second dispositif dans une première fenêtre de balayage d'un premier intervalle de balayage périodique quelconque, dans lequel le processeur (1401) est également configuré pour établir la connexion Bluetooth de premier type entre un premier dispositif et le second dispositif à l'aide du paquet de données de premier type ;
le processeur (1401) est également configuré pour obtenir, sur la base du paquet de données de premier type, un second paramètre de connexion pour établir la connexion Bluetooth de second type au second dispositif, comprenant :
le processeur (1401) est également configuré pour activer une seconde fenêtre de balayage sur la base du paquet de données de premier type, dans lequel la seconde fenêtre de balayage est utilisée pour recevoir un paquet de données de second type, et le paquet de données de second type comprend le second paramètre de connexion ; et
le processeur (1401) est également configuré pour analyser le paquet de données de second type pour obtenir le second paramètre de connexion ; et
le processeur (1401) est également configuré pour établir la connexion Bluetooth de second type au second dispositif sur la base du second paramètre de connexion ;
dans lequel le paquet de données de premier type est un paquet publicitaire, le paquet de données de second type est un paquet de radiomessagerie, la connexion Bluetooth de premier type est une connexion Bluetooth basse énergie, et la connexion Bluetooth de second type est une connexion Bluetooth classique.

11. Appareil de communication Bluetooth, comprenant :
un processeur (1401), configuré pour générer des premières informations d'identification sur la base d'une connexion Bluetooth de second type à établir ; et
un émetteur (1403), configuré pour envoyer en alternance un paquet de données de premier type et un paquet de données de second type, dans lequel le paquet de données de premier type est utilisé pour établir, par un premier dispositif, une connexion Bluetooth de premier type avec le second dispositif, et le paquet de données de second type est utilisé pour établir la connexion Bluetooth de second type, dans lequel
l'émetteur (1403) est également configuré pour envoyer les premières informations d'identification ;
dans lequel les premières informations d'identification indiquent au premier dispositif d'activer une seconde fenêtre de balayage, et la seconde fenêtre de balayage est utilisée par le second dispositif pour envoyer le paquet de données de second type ; et
dans lequel le paquet de données de premier type est un paquet publicitaire, le paquet de données de second type est un paquet de radiomessagerie, la connexion Bluetooth de premier type est une connexion Bluetooth basse énergie, et la connexion Bluetooth de second type est une connexion Bluetooth classique.

12. Support de stockage lisible par ordinateur, configuré pour stocker des instructions informatiques, dans lequel, lorsque les instructions informatiques sont exécutées sur un ordinateur, l'ordinateur est activé pour exécuter le procédé selon l'une quelconque des revendications 1 à 9.

13. Produit de programme informatique, comprenant des instructions informatiques, dans lequel lorsque les instructions informatiques sont exécutées sur un ordinateur, l'ordinateur est activé pour exécuter le procédé selon l'une quelconque des revendications 1 à 9.
